# EUROPEAN PATENT APPLICATION

(11) **EP 0 691 495 A1**
(43) Date of publication of application: **10.01.1996**
(21) Application number: 95304768.5
(22) Date of filing: 07.07.1995
(51) Int. Cl.: F16K 31/04, F16K 1/44

(54) **Flow control devices**

(30) Priority: 07.07.1994 GB 9413698
(71) Applicant: BLUE CIRCLE HEATING LIMITED, Rugby, Warwickshire CV21 3JH (GB)
(72) Inventor: Hobbs, Jeremy David, Warwickshire, CV37 7JA (GB)
(74) Representative: Lawrence, Brian Richard

(57) **Abstract**

A flow control device in the form of a gas valve comprises at least one valve member 6 and valve seat 4 disposed between a gas inlet 2 and gas outlet 3, the valve member being mounted on a shaft 8 which is biassed to close the gas valve by means of a spring 15, and which is operable under the control of a solenoid coil 12 and a linear actuated stepper motor 16 for controlling the opening of the valve.

## Description

This invention relates to flow control devices and is especially applicable to flow control devices such as gas valves such as are used in gas heating appliances, e.g. gas central heating appliances, gas fires, etc.

Gas valves used in gas heating appliances are required to carry out two functions. Firstly, as safety devices to isolate the gas appliances from the gas supply in the event of potentially hazardous conditions such as overheating or electrical mains failure, and secondly as a control function for varying gas flow dependant upon the type and degree of sophistication of the appliance itself.

At the present time regulations demand that the gas supply to an appliance be controlled by two valve seats in order to ensure that should any foreign matter, e.g. machining swarf from inside the valve or debris from within the gas supply lines, get caught on one of the seats preventing it from closing, a satisfactory seal with be made on the second seat ensuring that the gas supply can be turned off. Accordingly, at the present time it is usual to provide two separate valves, which are normally solenoid operated.

It is an object of the present invention to provide a flow control device in the form of a gas valve in which the safety and control functions are incorporated in a single valve.

According to the present invention there is provided a flow control device comprising a valve member mounted on a shaft and movable into and out of contact with a valve seat for flow control purposes, spring means operable on said shaft for biassing said valve member into contact with said valve seat, solenoid means operable on said shaft and which when energised causes said valve member to be moved out of contact with said valve seat against the bias of said spring means, and linear stepper motor means operable in conjunction with said solenoid means for controlling the movement of said valve member relative to said valve seat for controlling flow through said device, it being arranged that if energisation of said solenoid is terminated said valve member is moved into contact with said valve seat under the control of said spring means to cut off flow through said device.

In carrying out the invention it may be arranged that said solenoid device comprises a coil surrounding said shaft, and a pole piece which is attached to said shaft such that when said coil is energised, said pole piece is attracted to said coil and causes said shaft to be activated to cause said valve member to be moved out of contact with said valve seat.

Preferably, two valve members are provided mounted on said shaft having respective valve seats disposed serially between an input and an output of said device, and advantageously each of said valve members is resiliently e.g. spring mounted on said shaft.

An exemplary embodiment of the invention will now be described, reference being made to the accompanying drawings, in which:
Fig. 1 is a somewhat diagrammatic cross-sectional view of a flow control device in the form of a gas valve in accordance with the present invention, with the gas valve in the closed position; and
Fig. 2 is a similar view to that of Fig. 1, with the gas valve in the open position.

The gas valve shown in the drawings comprises a valve body 1 having a gas inlet 2 and a gas outlet 3. Between the gas inlet 2 and gas outlet 3 are disposed two valve seats 4 and 5 positioned one above the other effectively in series, and each of these is provided with co-operating valve members 6 and 7 respectively, each of which is mounted on an operating shaft 8.

The shaft 8 extends upwards through an aperture 9 in the gas inlet 2, which aperture 9 is provided with a shaft seal 10, and extends into an extension 11 of the valve body 1.

Within the extension 11 of the valve body 1 is disposed a solenoid coil 12 which surrounds the upper part of the shaft 8, and a solenoid pole piece 13 which is attached to the end of the shaft 8. Between the pole piece 13 and an inner dividing wall 14 of the extension 11, through which the shaft 8 extends, is disposed a compression spring 15 which biasses the shaft 8 in an upwards direction so causing the valve members 6 and 7 to bear against their respective valve seats 4 and 5 to prevent flow between the gas inlet 2 and gas outlet 3.

Disposed in the housing extension 11 on the other side of the dividing wall 14 is a linear actuated stepper motor 16 which acts on the shaft 8.

The gas valve thus far described operates as follows:-

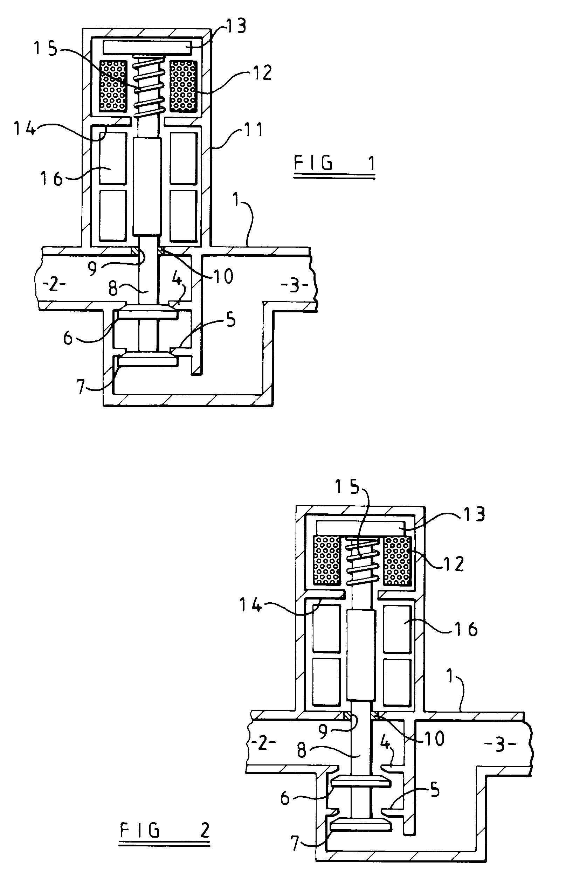

When the solenoid coil 12 and stepper motor 16 are not energised, the position of the gas valve is as shown in Fig. 1, with the valve members 6 and 7 biassed against their respective valve seats 4 and 5 under the action of the spring 15, thereby preventing gas flow between the gas inlet 2 and the gas outlet 3.

When the gas valve is operated as is depicted in Fig. 2, the solenoid coil 12 is energised which causes the pole piece 13 to be attracted to the coil 12 and causes the shaft 8 to be moved downwards against the pressure of the coil 15. At the same time the linear actuated stepper motor 16 is energised to cause it to move to its zero or minus zero position and effectively varies the length of the shaft 8 so that the valve members 6 and 7 are maintained on their respective valve seats 4 and 5, thereby maintaining the gas valve closed.

The stepper motor 16 is then operated under the control of the various sensors and control electronics (not shown) normally associated with it to cause the valve members 6 and 7 to be moved off of their respective valve seats 4 and 5 in a controlled manner, in order to control gas flow between the gas inlet 2 and gas outlet 3 as required. Using programmable control it is possible to control the opening of the gas valve in any desired manner, e.g. to provide slow opening, step opening, ramp functions and other modulating modes of operation. Other functions, such as multi-stage functions could be possible.

In the event that the electrical supply to the gas valve is terminated or otherwise removed, the stepper motor 16 is rendered immobile, and the solenoid coil is de-energised causing the shaft 8 to be moved upwards as viewed in the drawings, under the action of the spring 15, thereby causing the valve members 6 and 7 to contact their respective valve seats 4 and 5 to cause the gas valve to be closed, to prevent gas flow between the gas inlet 2 and the gas outlet 3.

When the power to the stepper motor 16 is removed, its positional setting at the time may vary, and it is important that there is sufficient travel caused by the spring 15 to accommodate this. The stepper motor 16 repositions itself to zero or minus zero when it is next energised as has already been described.

If there is any debris on either of the valve seats 4 or 5, it is envisaged that the high closing force which may be applied as a result of the use of the stepper motor 16 in combination with sufficiently resilient valve members will result in at least one of the valve members 6 or 7 making seating contact with its respective valve seat 4 or 5.

In order to ensure that an adequate seal is achieved, it is envisaged that each of the valve members 6 and 7 is spring mounted on the shaft 8 thereby enabling one of the valve members to seat properly should the other member be prevented from doing so.

It should be appreciated that the gas valve which has been described has been given by way of example only and may be adapted to suit any particular application. For example, in some applications it is envisaged that only a single valve member and corresponding valve seat is used. Also, the valve construction described may be applicable to other than gas applications.

## Claims

1. A flow control device comprising a valve member mounted on a shaft and movable into and out of contact with a valve seat for flow control purposes, spring means operable on said shaft for biassing said valve member into contact with said valve seat, solenoid means operable on said shaft and which when energised causes said valve member to be moved out of contact with said valve seat against the bias of said spring, and linear stepper motor means operable in conjunction with said solenoid means for controlling the movement of said valve member relative to said valve seat for controlling flow through said device, it being arranged that if energisation of said solenoid is terminated said valve member is moved into contact with said valve seat under the control of said spring means to cut off flow through said device.

2. A device as claimed in claim 1, in which said solenoid device comprises a coil surrounding said shaft, and a pole piece which is attached to said shaft such that when said coil is energised, said pole piece is attracted to said coil and causes said shaft to be actuated to cause said valve member to be moved out of contact with said valve seat.

3. A device as claimed in claim 1 or claim 2, comprising two valve members mounted on said shaft and having respective valve seats disposed serially between an input and an output of said device.

4. A device as claimed in claim 3, in which each of said valve members is resiliently mounted on said shaft.

5. A device as claimed in claim 4, in which each of said valve members is spring mounted on said shaft.

6. A flow control device substantially as hereinbefore described with reference to the accompanying drawings.

7. A flow control device as claimed in any preceding claim, in the form of a gas valve.
